# DEMANDE DE BREVET EUROPEEN

(11) **EP 4 001 603 A1**
(43) Date de publication de la demande: **25.05.2022**
(21) Numéro de dépôt: 21199657.4
(22) Date de dépôt: 29.09.2021
(51) Int. Cl.: F01N 3/20

(54) **SYSTEME DE REDUCTION CATALYTIQUE AVEC DISPOSITIF DE PROTECTION THERMIQUE**

(30) Priorité: 17.11.2020 FR 2011750
(71) Demandeur: PSA Automobiles SA, 78300 Poissy (FR)
(72) Inventeur: DROIT, Julien, 70000 Vaivre et Montoille (FR); LAFAYE, Didier, 70250 Ronchamp (FR); DERUELLE, Romain, 25420 Berche (FR)

(57) **Abrégé**

La présente invention concerne un système de réduction catalytique pour une ligne d'échappement de moteur thermique comportant un injecteur apte à injecter une quantité d'agent réducteur, l'injecteur ayant un corps et un embout de connexion coopérant avec un connecteur d'une canalisation acheminant l'agent réducteur jusqu'audit injecteur, un dispositif de protection thermique (30) comprenant un capot (31) entourant au moins en partie l'embout de connexion de l'injecteur et le connecteur de la canalisation, et un dispositif de fixation (32) par encliquetage sur le corps de l'injecteur, caractérisé en ce que le capot (31) comprend une paroi mobile (31d) articulée autour d'une charnière (31e) et agencée de sorte à entourer complètement l'embout de connexion de l'injecteur et le connecteur lorsque cette paroi (31d) est rabattue.

## Description

La présente invention revendique la priorité de la demande française N°2011750 déposée le 17.11.2020 dont le contenu (texte, dessins et revendications) est ici incorporé par référence.

La présente invention porte sur un système de réduction sélective catalytique, dit aussi système SCR (acronyme pour "Selective Catalytic Réduction" en anglais), muni d'un dispositif de protection thermique. L'invention trouve une application particulièrement avantageuse lors du fonctionnement dans des conditions sévères des systèmes SCR de type liquide équipant les véhicules à moteur diesel.

Dans un contexte de dépollution des gaz d'échappement du moteur, les systèmes SCR visent à réduire les oxydes d'azote (NOx) contenus dans les gaz d'échappement. Les systèmes SCR mettent en œuvre une réaction chimique entre les oxydes d'azote et un agent réducteur prenant classiquement la forme d'ammoniac.

L'injection de l'ammoniac dans la ligne d'échappement des gaz est généralement réalisée par l'intermédiaire d'un précurseur, tel que l'urée qui se décompose en ammoniac et en dioxyde de carbone sous l'effet de la chaleur.

Les systèmes utilisant un agent réducteur sous forme liquide comporte un système de dégivrage pour permettre un fonctionnement en dessous de la température de solidification de l'agent réducteur (de l'ordre de -11°C). Le système de dégivrage est constitué de résistances chauffantes situées dans le réservoir et d'un fil résistif positionné le long de la canalisation. On prévoit également une purge du système à la fin de chaque roulage pour éviter le gel de l'agent réducteur lors du stationnement susceptible d'engendrer la casse de l'injecteur.

Toutefois, dans certaines architectures de véhicule, l'injecteur est exposé à des flux aérauliques importants, en sorte que pour certains points de fonctionnement (à températures froides et vitesses élevées) des portions gelées d'agent réducteur sont susceptibles de se former au niveau de l'embout de connexion de l'injecteur avec la canalisation du système SCR car les résistances chauffantes ne s'étendent pas dans cette zone. Cette formation de glaçons empêche alors l'injection d'agent réducteur, ainsi qu'une purge correcte du circuit en fin de roulage.

Pour éviter ce phénomène, il est connu un dispositif isolant flexible de type chaussette qui vient isoler l'embout de connexion de l'injecteur ainsi que le connecteur correspondant. Toutefois, cette chaussette arrivant livrée en bord de ligne de montage, elle nécessite une phase finale de pliage avant d'être montée complétement sur l'extrémité de la canalisation SCR et de la zone de connexion sur injecteur SCR. Cette opération impose une méthodologie de mise en place associée à un contrôle visuel qui est longue et coûteuse à mettre en œuvre en usine de fabrication. En outre, certains environnements en zone Injecteur et échappement présentent des contraintes d'encombrement telles, qu'il n'est pas possible d'installer la chaussette isolante autour de l'embout de connexion de l'injecteur.

On connait encore du document FR3069280A1 un système de réduction sélective catalytique muni d'un dispositif de protection thermique d'un injecteur comprenant un capot entourant au moins en partie l'embout de connexion de l'injecteur et un dispositif de fixation par encliquetage sur le corps de l'injecteur. La protection thermique de l'injecteur apportée par ce dispositif de protection est cependant parfois insuffisante.

L'invention vise à améliorer la protection thermique de l'injecteur. Pour atteindre cet objectif, il est prévu selon l'invention un système de réduction catalytique pour une ligne d'échappement de moteur thermique comportant:
- un injecteur apte à injecter une quantité d'agent réducteur, l'injecteur ayant un corps et un embout de connexion coopérant avec un connecteur d'une canalisation acheminant l'agent réducteur jusqu'audit injecteur,
- un dispositif de protection thermique comprenant un capot entourant au moins en partie l'embout de connexion de l'injecteur et le connecteur de la canalisation, et
- un dispositif de fixation par encliquetage sur le corps de l'injecteur,
caractérisé en ce que le capot comprend une paroi mobile articulée autour d'une charnière et agencée de sorte à entourer complètement l'embout de connexion de l'injecteur et le connecteur lorsque cette paroi est rabattue.

L'effet technique est d'obtenir une meilleure protection thermique de l'embout de connexion de l'injecteur, avec un agencement permettant un montage facile de la protection thermique sur l'injecteur.

Diverses caractéristiques supplémentaires peuvent être prévues, seules ou en combinaisons :
Selon une réalisation, la paroi mobile comprend des moyens de fixation par encliquetage au capot.
Selon une réalisation, les moyens de fixation sont reliés à la charnière au moyen d'un pontet de renfort, la paroi mobile étant solidaire du pontet.
Selon une réalisation, la paroi mobile comprend une butée d'arrêt en rotation.
Selon une réalisation, l'embout de connexion est coudé, avec une partie d'extrémité s'écartant de l'axe longitudinal de l'injecteur au niveau d'un coude, cette partie d'extrémité venant se connecter au connecteur. Dans cette réalisation, le capot forme un L, avec une première partie du L entourant en partie le corps de l'injecteur et la partie de l'embout de connexion reliée au corps de l'injecteur qui précède le coude et une seconde partie du L entourant la partie d'extrémité de l'embout de connexion et la paroi mobile vient fermer la seconde partie du L par rotation autour de la charnière.
Selon une réalisation, le capot comporte deux parois en regard l'une de l'autre reliées entre elles par une paroi de liaison de manière à présenter globalement une forme en U.
Selon une réalisation, le capot est réalisé dans un matériau thermiquement conducteur, notamment en métal.
Selon une réalisation, le dispositif de fixation par encliquetage comporte au moins une pince munie de deux bras élastiquement déformables situés en vis-à-vis l'un par rapport à l'autre.
Selon une réalisation, la pince coopère avec une nervure issue du corps de l'injecteur.

L'invention a aussi pour objet une ligne d'échappement comportant un système de réduction catalytique selon l'une quelconque des variantes précédemment décrites. D'autres particularités et avantages apparaîtront à la lecture de la description ci-après d'un mode particulier de réalisation, non limitatif de l'invention, faite en référence aux figures dans lesquelles :
[Fig 1] : cette figure est une représentation schématique d'un système de réduction sélective catalytique selon la présente invention.
[Fig 2] : cette figure est une vue en perspective d'un dispositif de protection thermique selon l'invention.
[Fig 3] : cette figure est une vue en perspective d'un injecteur d'un système de réduction sélective catalytique et d'un connecteur de canalisation selon la présente invention.

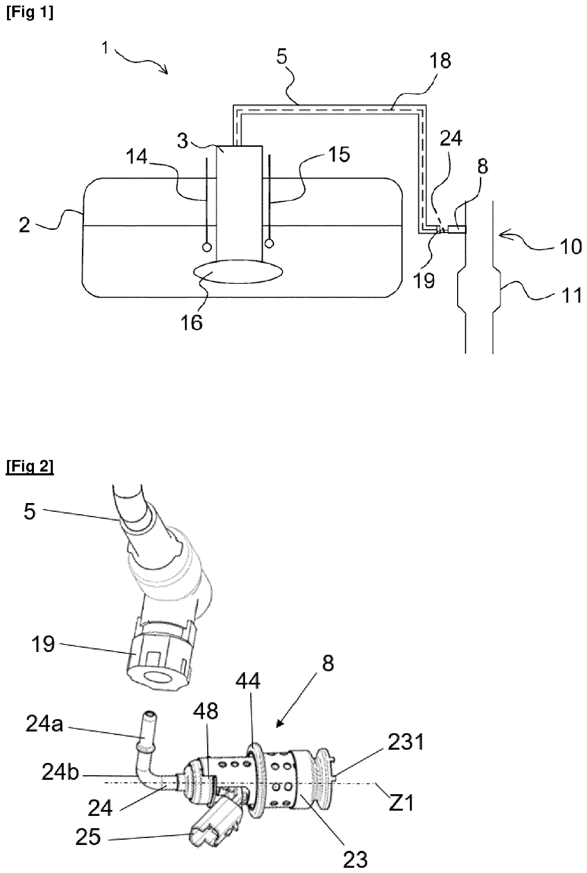

La figure 1 montre un système de réduction catalytique 1, dit aussi système SCR (acronyme pour "Selective Catalytic Réduction" en anglais), comportant au moins un réservoir 2 de stockage d'un agent réducteur sous forme liquide, une pompe 3 généralement réversible, ainsi qu'au moins une canalisation 5 reliant la pompe 3 à un injecteur 8 destiné à injecter de l'agent réducteur dans une ligne d'échappement 10 de moteur thermique. L'injecteur 8 est positionné en amont d'un catalyseur 11. En outre, le réservoir 2 contient un capteur de niveau 14, un capteur de température 15, et des résistances chauffantes 16 appartenant à un système de dégivrage. Ce système de dégivrage comporte en outre un fil résistif 18 positionné le long de la canalisation 5.

Comme cela est représenté sur la figure 2, l'injecteur 8 comprend un corps 23 et un embout de connexion 24. L'embout de connexion 24 fixé sur le corps 23 est connecté à une extrémité de la canalisation 5 via un connecteur 19. Ce connecteur 19 est par exemple un connecteur encliquetable rapide (dit "Quick Connect" en anglais).

Le corps 23 comporte une extrémité avant 231 adaptée à coopérer avec une interface de forme complémentaire pour sa fixation sur la ligne d'échappement 10 au moyen par exemple d'un collier de serrage. En outre, un connecteur 25 est destiné à assurer l'alimentation et le pilotage de l'injecteur 8.

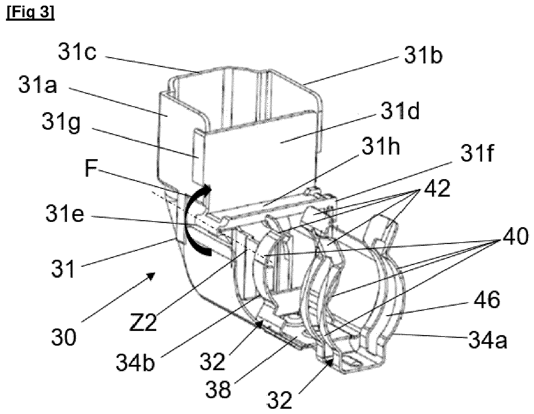

Comme cela est représenté sur les figures 2 et 3, un dispositif de protection thermique 30 comporte un capot 31 entourant au moins en partie l'embout de connexion 24 de l'injecteur 8 et le connecteur 19 de la canalisation 5. Ce capot 31 est associé à un dispositif de fixation 32 par encliquetage sur le corps 23 de l'injecteur 8.

Le capot 31 comporte deux parois latérales 31a, 31b en regard l'une de l'autre reliées entre elles par une paroi de liaison 31c de manière à présenter globalement une forme en U. Le capot 31 comprend encore une paroi mobile 31d articulée autour d'une charnière 31e disposée sur une des parois latérales, ici 31a. La paroi mobile 31e est rabattable sur l'autre paroi latérales, 31b, par rotation (action illustrée par la flèche F) autour de l'axe de rotation Z2 de la charnière 31e, de sorte à entourer complètement l'embout de connexion 24 de l'injecteur 8 et le connecteur 19 en fermant la partie du capot 31 en U.

La paroi mobile 31d peut comprendre des moyens de fixation 31f par encliquetage à la paroi latérale 31b. La paroi mobile 31d peut également comprendre une butée d'arrêt en rotation 31g. La butée 31g vient en contact avec la paroi latérale 31a en fin de rotation.

Les moyens de fixation 31f sont reliés à la charnière 31e au moyen d'un pontet 31h de renfort. La paroi mobile 31d est solidaire du pontet 31h.

Comme illustré en figure 2, l'embout de connexion 24 peut être coudé, avec une partie d'extrémité 24a s'écartant de l'axe longitudinal Z1 de l'injecteur 8 au niveau d'un coude 24b. Cette partie d'extrémité 24a vient se connecter au connecteur 19. Dans ce cas, afin de suivre cette partie d'extrémité 24a, il est prévu que le capot 31 du dispositif de protection thermique 30 forme un L. Une première partie du L entoure en partie le corps 23 de l'injecteur 8 et la partie de l'embout de connexion 24 reliée au corps 23 de l'injecteur 8 qui précède le coude 24b. Une seconde partie du L entoure la partie d'extrémité 24a de l'embout de connexion 24.

Dans ce cas, la paroi mobile 31d vient fermer la seconde partie du L par rotation autour de l'axe Z2 de la charnière 31e. La charnière 31e et moyens de fixation 31f sont disposés sur la première partie du L. Le pontet 31h et la paroi mobile 31d forme le coude intérieur du L.

Le capot 31 est réalisé dans un matériau thermiquement conducteur, notamment en métal. Cela permet de récupérer de la chaleur générée par la ligne d'échappement 10 (l'injecteur présentant son extrémité 231 en contact avec la ligne 10) et de l'acheminer par conduction dans la zone froide constituée par l'ensemble embout de connexion 24 et connecteur 19.

Par ailleurs, le dispositif de fixation par encliquetage 32 comporte deux pinces 34a, 34b globalement en forme de C issues d'un support 38 fixé sur une face interne du capot 31.

En variante, les pinces 34a, 34b sont monoblocs avec le support 38 en venant de matière de la même pièce. En l'occurrence, les pinces 34a, 34b sont situées de part et d'autre du connecteur 25 mais elles pourraient alternativement être situées d'un même côté du connecteur 25.

Plus précisément, chaque pince 34a, 34b en forme de C est munie de deux bras 40 élastiquement déformables situés en vis-à-vis l'un par rapport à l'autre. Les extrémités libres des bras 40 sont espacées l'une par rapport à l'autre pour permettre l'insertion du corps 23 de l'injecteur 8 entre les bras 40 par déformation élastique des bras 40.

En position non contrainte, une plus petite dimension entre les deux bras 40 de la pince 34a, 34b est inférieure à la plus grande dimension du corps 23 de l'injecteur 8 dans la zone d'encliquetage correspondante destinée à recevoir la pince 34a, 34b. Lors la mise en place du capot 31, les bras 40 de la pince 34a, 34b s'écartent l'un par rapport à l'autre par déformation élastique lors de l'insertion de l'injecteur 8, puis se rapprochent l'un de l'autre de manière à enserrer une portion de la circonférence externe du corps 23 de l'injecteur 8. La mise en place correcte du capot 31 peut être contrôlée par le son que produit la pièce métallique 30 lorsque l'injecteur 8 entre en contact avec le fond du capot 31.

Avantageusement, chaque bras 40 de la pince 34a, 34b comporte un bec 42 du côté de son extrémité libre formant un angle non nul avec la portion du bras 40 destinée à être positionnée autour du corps 23 de l'injecteur 8. Les deux becs 42 de la pince 34a, 34b délimitent une ouverture évasée facilitant l'installation du dispositif de protection thermique 30.

La pince 34a est destinée à coopérer avec une nervure saillante 44 issue du corps 23 de l'injecteur 8 qui présente une forme annulaire. A cet effet, les bras 40 de la pince 34a comportent chacun une fenêtre 46 destinée à recevoir la nervure 44 ménagée dans la zone d'encliquetage. La liaison entre la nervure 44 et la fenêtre 46 permet d'assurer un blocage en translation du capot 31. La fenêtre 46 s'étend avantageusement jusqu'aux becs 42 pour permettre le centrage des pinces 34a sur la nervure 44 de l'injecteur 8.

Par ailleurs, la pince 34a est destinée à coopérer avec un méplat 48 ménagé dans le corps 23 de l'injecteur 8. Les bras 40 de la pince 34b présentent des largeurs différentes afin de jouer un rôle de détrompeur lors de l'installation du capot 31. La pince 34b a pour fonction de verrouiller le dispositif 30 sur le corps 23 de l'injecteur 8 en bloquant le mouvement possible dans les degrés de liberté laissés par la pince 34a.

En variante, dans un mode de réalisation dégradé, on prévoit une seule pince de fixation 34a, 34b pour fixer le capot 31 sur l'injecteur 8.

## Revendications

1. Système de réduction catalytique (1) pour une ligne d'échappement (10) de moteur thermique comportant:
- un injecteur (8) apte à injecter une quantité d'agent réducteur, l'injecteur (8) ayant un corps (23) et un embout de connexion (24) coopérant avec un connecteur (19) d'une canalisation (5) acheminant l'agent réducteur jusqu'audit injecteur (8),
- un dispositif de protection thermique (30) comprenant un capot (31) entourant au moins en partie l'embout de connexion (24) de l'injecteur (8) et le connecteur (19) de la canalisation (5), et
- un dispositif de fixation (32) par encliquetage sur le corps (23) de l'injecteur (8), **caractérisé en ce que** le capot (31) comprend une paroi mobile (31d) articulée autour d'une charnière (31e) et agencée de sorte à entourer complètement l'embout de connexion (24) de l'injecteur (8) et le connecteur (19) lorsque cette paroi (31d) est rabattue.

2. Système selon la revendication 1, **caractérisé en ce que** la paroi mobile (31d) comprend des moyens de fixation (31f) par encliquetage au capot (31).

3. Système selon la revendication 2, **caractérisé en ce que** les moyens de fixation (31f) sont reliés à la charnière (31e) au moyen d'un pontet de renfort (31h), la paroi mobile (31d) étant solidaire du pontet (31h).

4. Système selon l'une des revendications 1 à 3, **caractérisé en ce que** la paroi mobile (31d) comprend une butée d'arrêt en rotation (31g).

5. Système selon l'une des revendications 1 à 4, **caractérisé en ce que** l'embout de connexion (24) est coudé, avec une partie d'extrémité (24a) s'écartant de l'axe longitudinal (Z1) de l'injecteur (8) au niveau d'un coude 24b, cette partie d'extrémité (24a) venant se connecter au connecteur (19), **en ce que** le capot (31) forme un L, avec une première partie du L entourant en partie le corps (23) de l'injecteur (8) et la partie de l'embout de connexion (24) reliée au corps (23) de l'injecteur (8) qui précède le coude (24b) et une seconde partie du L entourant la partie d'extrémité (24a) de l'embout de connexion (24) et **en ce que** la paroi mobile (31d) vient fermer la seconde partie du L par rotation autour de la charnière (31e).

6. Système selon l'une quelconque des revendications précédentes, **caractérisé en ce que** le capot (31) comporte deux parois (31a, 31b) en regard l'une de l'autre reliées entre elles par une paroi de liaison (31c) de manière à présenter globalement une forme en U.

7. Système selon l'une quelconque des revendications précédentes, **caractérisé en ce que** le capot (31) est réalisé dans un matériau thermiquement conducteur, notamment en métal.

8. Système selon l'une quelconque des revendications précédentes, **caractérisé en ce que** le dispositif de fixation (32) par encliquetage comporte au moins une pince (34a, 34b) munie de deux bras (40) élastiquement déformables situés en vis-à-vis l'un par rapport à l'autre.

9. Système selon la revendication 8, **caractérisé en ce que** la pince (34a) coopère avec une nervure (44) issue du corps (23) de l'injecteur (8).

10. Ligne d'échappement (10) comportant un système de réduction catalytique (1) selon l'une quelconque des revendications précédentes.
